# EUROPÄISCHE PATENTSCHRIFT

(11) **EP 1 424 506 B1**
(45) Veröffentlichungstag und Bekanntmachung des Hinweises auf die Patenterteilung: **09.04.2008**
(21) Anmeldenummer: 03023310.0
(22) Anmeldetag: 15.10.2003
(51) Int. Cl.: F16F 9/05

(54) **Luftfederanordnung**
Air spring arrangement
Ensemble de suspension pneumatique

(30) Priorität: 29.11.2002 DE 10256150
(43) Veröffentlichungstag der Anmeldung: 02.06.2004
(73) Patentinhaber: Carl Freudenberg KG, 69465 Weinheim (DE)
(72) Erfinder: Lühmann, Cord, Dipl.-Ing., 21614 Buxtehude (DE)
(74) Vertreter: Mattausch, Klaus

(56) Entgegenhaltungen:
- EP-A- 1 239 181
- WO-A-98/11361
- WO-A-02/103218
- DE-A- 10 229 584
- US-A- 4 768 758
- US-A- 5 769 401

## Beschreibung

Die Erfindung betrifft eine Luftfederanordnung, bestehend wenistens aus:
- einem Luftfederkopf mit einer Aufnahme für ein Dämpferlager, das einen Elastomerkörper und ein Tragstück umfasst,
- einem Stoßdämpfer aus einem Behälterrohr, das zumindest abschnittsweise von einem Abrollkolben umgeben ist, sowie einer Kolbenstange, die fest mit dem Tragstück des Dämpferlagers verbunden ist und gleitend in das Behälterrohr eintaucht,
- einem Luftfederbalg aus elastomerem Werkstoff, der insbesondere mit einem eingebetteten Festigkeitsträger versehen ist, wobei die beiden Balgenden am Luftfederkopf einerseits und am Abrollkolben andererseits befestigt sind, wodurch der Luftfederbalg eine volumenelastische Luftkammer einschließt, wobei ferner der Luftfederbalg eine erste Schlaufe ausbildet, die an der Außenwand des Abrollkolbens entlang gleiten kann und der Luftfederkopf eine Außenkontur aufweist, die mit einer zweiten Schlaufe des Luftfederbalges in Kontakt steht.

Eine Luftfederanordnung mit den oben genannten Grundbauteilen wird auch als Luftfederbein bezeichnet. Sie findet im Fahrzeugbau (PKW, Nutz- und Schienenfahrzeuge) eine breite Anwendung, wobei insbesondere auf folgende Druckschriften verwiesen wird:
DE 195 08 980 C2, DE 197 53 637 A1, DE 198 26 480 A1 und DE 100 50 028 A1.
In den Stand der Technik ist auch die EP-A-1 239 181 einzubeziehen, die eine Luftfederanordnung mit einem Luftfederkopf zeigt, der aus einem Deckel mit einem Elastomerkörper als Elastomerlager besteht.

Ein besonderer Einsatzschwerpunkt der gattungsgemäßen Luftfederanordnung ist der PKW-Sektor, wobei die Automobilhersteller hinsichtlich Akustik und Komfort hohe Anforderungen stellen, insbesondere wiederum unter folgenden Gesichtspunkten:
a) Eine Abkopplung des Luftfederbalges zum karosseriefesten Anbindungsteil ist zu realisieren, um eine akustisch optimale Lösung zu erarbeiten. Geräusche im Innenraum des Fahrzeuges, die aus der Luftfederanordnung während des Federvorganges resultieren, sind zu vermeiden.
b) Eine möglichst geringe Reibung in dem Dämpferdichtungspaket ist zu realisieren. Durch eine geringe Reibung wird das Ansprechverhalten einer Luftfeder wesentlich verbessert und somit der Komfort des Systems.
c) Eine Rotation um die Achse der Linearführung soll ermöglichst werden, ohne ein Drehlager im Bereich der Aufnahmekammer einsetzen zu müssen.
d) Schließlich ist ein geringeres Gewicht der Luftfederanordnung anzustreben, um ein geringes Fahrzeuggewicht zu realisieren.

Die Aufgabe der Erfindung ist es, eine Luftfederanordnung der gattungsgemäßen Art bereitzustellen, bei der wenigsten die Anforderungen (a, b, c) erfüllt werden, vorteilhafterweise jedoch auch unter Einbezug der Anforderung (d).

Gelöst wird diese Aufgabe gemäß Kennzeichen des Patentanspruchs 1 dadurch, dass die Aufnahme als Aufnahmekammer ausgebildet ist, in der Form eines Topfes aus Stahl oder Aluminium, die von einem getrennt hergestellten und aus Kunststoff bestehenden Gehäuse eingefasst ist, dessen Außenkontur die gekrümmte Abroll- und Anschlagfläche für die zweite Schlaufe des Luftfederbalges bildet, und die einstückig und im Wesentlichen rechtwinklig in ein karosseriefestes das Gehäuse abdeckendes Anbindungsteil übergeht.

Zweckmäßige Ausgestaltungen der Erfindung sind den Patentansprüchen 2 bis 6 genannt.

Die Erfindung wird nun anhand eines Ausführungsbeispiels unter Bezugnahme auf eine Zeichnung erläutert.

Die Luftfederanordnung **1** besteht aus zwei Funktionsbereichen. Die Luftfeder **2** übernimmt die Funktion der Tragkrafterzeugung, während der Stoßdämpfer **3** für die Funktion der Linearführung Y zuständig ist. Diese beiden Funktionsbereiche werden nun näher vorgestellt.

Die Luftfeder **2** umfasst einen Luftfederbalg **4** aus elastomerem Werkstoff, der zumeist mit einem eingebetteten Festigkeitsträger in Form eines Axialbalges (DE 36 43 073 A1) oder Kreuzlagenbalges (DE 29 04 522 A1) versehen ist, wobei bei Verwendung eines Axialbalges vorzugsweise eine Außenführung **5** vorhanden ist. Beim Kreuzlagenbalg sind dagegen Varianten mit oder ohne Außenführung möglich. Von besonderer Bedeutung ist hier der außen geführte Luftfederbalg. Der Luftfederbalg kann zylindrisch oder konturiert (DE 100 01 018 A1) gestaltet sein. Die beiden Balgenden sind innerhalb der beiden Anschlussbereiche an dem Gehäuse **7** des Luftfederkopfes **6** bzw. an dem Abrollkolben **8** befestigt, beispielsweise mittels Klemmringen. Dadurch wird eine volumenelastische Luftkammer **9** gebildet. Bei der Einfederung entsteht eine erste Schlaufe **10**, die an der Außenwand **11** des Abrollkolbens entlang gleiten kann.

Der Stoßdämpfer **3** umfasst ein Behälterrohr **12**, das zumindest abschnittsweise vom Abrollkolben **8** umgeben ist, und eine Kolbenstange **13**, die gleitend in das Behälterrohr eintaucht. Innerhalb des Eintauchbereiches (hier nicht dargestellt) ist die Kolbenstange mit einem Dämpferkolben sowie einer Kolbenstangenführung mit Dämpferdichtungspaket X versehen. Die Querkraft im Dämpferdichtungspaket der Linearführung Y ergibt sich durch die achsspezifische Kinematik bei Ein- und Ausfedervorgängen aufgrund einer Drehung der Linearführung um die Drehachse des Dämpferlagers **16** und das notwendige Mitschwenken des Luftfederbalges **4**. Im Übergangsbereich von Behälterrohr **12** und Abrollkolben **8** ist ferner ein Dichtmittel **14** (z.B. O-Ring) vorhanden. Das Behälterrohr selbst steht mit einer Fahrwerksanbindung Z in Kontakt.

Der Luftfederkopf **6** mit Anbindungsmöglichkeiten an die Karosserie weist ein Gehäuse **7** und eine Aufnahmekammer **15** auf, wobei wiederum in die Aufnahmekammer ein Dämpferlager **16**, das einen Elastomerkörper und ein Tragstück umfasst, einsetzbar ist. Das Tragstück ist dabei über eine Bodenöffnung **17** der Aufnahmekammer fest mit der Kolbenstange **13** verbunden. Eine Dichtplatte **18** dichtet die Aufnahmekammer ab. Als Alternative zu dieser statischen Dichtung kann auch eine dynamische Dichtung im Bereich der Bodenöffnung **17** verwendet werden (DE 101 32 061 A1). Der Elastomerkörper ist ein ungeschäumter Werkstoff, beispielsweise auf Basis von Naturkautschuk, oder ein geschäumter Werkstoff auf mikrozellulärer Basis, beispielsweise Polyester-Polyurethan.

Das Gehäuse **7** des Luftfederkopfes **6** weist eine Außenkontur **19** auf, die mit einer zweiten Schlaufe **20** des Luftfederbalges **4** in Kontakt steht. Es entsteht also eine Doppelschlaufenkonstruktion. Durch die Kombination des Stoßdämpfers **3** mit einer Doppelschlaufenluftfeder **2** werden zunächst die Mindestanforderungen (a, b, c) erfüllt. Diese Kombination eröffnet darüber hinaus die zusätzliche Erfüllung der Anforderung (d), da dieses Konstruktionsprinzip einer Leichtbauweise zugänglich ist, und zwar unter Verwendung gewichtssparender Werkstoffe der mit den beiden Schlaufen **10** und **20** unmittelbar korrespondierenden Bauteile.

Um eine Rotation des Luftfederkopfes **8** und der Linearführung Y um die ortsfeste Aufnahmekammer **15** zu ermöglichen, muss die erste und zweite Schlaufe **10** bzw. **20** eine Drehung zulassen. Dadurch entstehen Rückstellmomente, die die Luftfederanordnung in die ursprüngliche Konstruktionslage zurückbringen wollen. Durch den Einsatz der zweiten Schlaufe **20** wird nun das Rückstellmoment verringert, und zwar gegenüber einer Luftfederanordnung mit nur einer Schlaufe. Die Doppelschlaufenkonstruktion ist bevorzugt mit einem Axialbalg ausführbar, da der Axialbalg ein geringes Rückstellmoment bei Rotation um die Achse der Linearführung bildet.

Zwecks Optimierung der Anforderungen (a, b, c, d) sind folgende Maßnahmen zweckmäßig:
- Die Drehpunkte D des Dämpferlagers **16** und der zweiten Schlaufe **20** liegen aufeinander oder weichen nur geringfügig voneinander ab, und zwar bedingt durch Bauraumvorgaben. Dadurch kann die resultierende Querkraft im Dämpferdichtungspaket X stark reduziert werden. Es bilden sich nur geringe Rückstellmomente um den Drehpunkt der Linearführung Y aufgrund der Anordnung der Drehpunkte zueinander. Ein Rückstellmoment würde im optimalen Fall nur durch das Dämpferlager gebildet werden. Aus der dann entstehenden geringen Querkraft im Dämpferdichtungspaket der Linearführung resultiert eine geringe Reibung und somit ein gutes Ansprechverhalten der Luftfederanordnung.
- Die Außenkontur **19** des Gehäuses **7** ist als gekrümmte Abroll- und Anschlagsfläche gestaltet. Im Gegensatz zur ersten Schlaufe **10** kommt der zweiten Schlaufe **20**, die die erwünschte Abkopplung des Luftfederbalges **4** zur Karosserie realisiert, nur eine begrenzte Abrollfunktion zu. Am eigentlichen Abrollvorgang ist daher im Wesentlichen nur die erste Schlaufe **10** beteiligt.
- Das Gehäuse **7** und die Aufnahmekammer **15** sind herstellungsbedingt getrennte Bauteile, wobei die Aufnahmekammer für das Dämpferlager **16** ein Topf ist, der mit dem Gehäuse zusammengefügt ist. Die Aufnahmekammer geht dabei einstückig und im Wesentlichen rechtwinklig in ein karosseriefestes Anbindungsteil **21** über, wobei das Anbindungsteil das Gehäuse abdeckt. Der Topf besteht aus Stahl oder Aluminium, während das Gehäuse **7** aus Kunststoff gebildet ist. Durch diese Stahl-Kunststofflösung bzw. Aluminium-Kunststofflösung wird eine Gewichtsreduzierung erzielt.
- Der Abrollkolben **8** mit Korrespondenz zur ersten Schlaufe **10** besteht ebenfalls aus Kunststoff, verbunden ebenfalls mit einer Gewichtsreduzierung. Außerdem wird hiermit eine geringe ungefederte Masse am Rad erzeugt.
- Der Kunststoff für das Gehäuse **7** und den Abrollkolben **8** ist faserverstärkt, insbesondere glasfaserverstärkt, was die Belastbarkeit der Bauteile erhöht.
- Im näheren Bereich der zweiten Schlaufe **20** ist ein Stützring **22** vorhanden, der den Luftfederbalg **4** an die Außenführung **5** presst. Der Stützring erstreckt sich dabei vom Befestigungsbereich des entsprechenden Balgendes in radialer Richtung. Auf diese Weise wird die Außenführung verklemmend am Luftfederbalg befestigt, ohne die Wirkungsweise der zweiten Schlaufe zu beeinträchtigen.

### Bezugszeichenliste

- **1**: Luftfederanordnung
- **2**: Luftfeder (Doppelschlaufenluftfeder)
- **3**: Stoßdämpfer (Schwingungsdämpfer)
- **4**: Luftfederbalg
- **5**: Außenführung
- **6**: Luftfederkopf
- **7**: Gehäuse
- **8**: Abrollkolben
- **9**: volumenelastische Luftkammer
- **10**: erste Schlaufe (Rollfalte)
- **11**: Außenwand (Abrollfläche)
- **12**: Behälterrohr
- **13**: Kolbenstange
- **14**: Dichtmittel
- **15**: Aufnahmekammer (Topf)
- **16**: Dämpferlager (Kopflager)
- **17**: Bodenöffnung der Aufnahmekammer
- **18**: Dichtplatte
- **19**: Außenkontur des Gehäuses
- **20**: zweite Schlaufe (Rollfalte)
- **21**: karosseriefestes Anbindungsteil
- **22**: Stützring
- D: Drehpunkte (Dämpferlager, zweite Schlaufe)
- X: Dämpferdichtungspaket
- Y: Linearführung
- Z: Fahrwerksanbindung

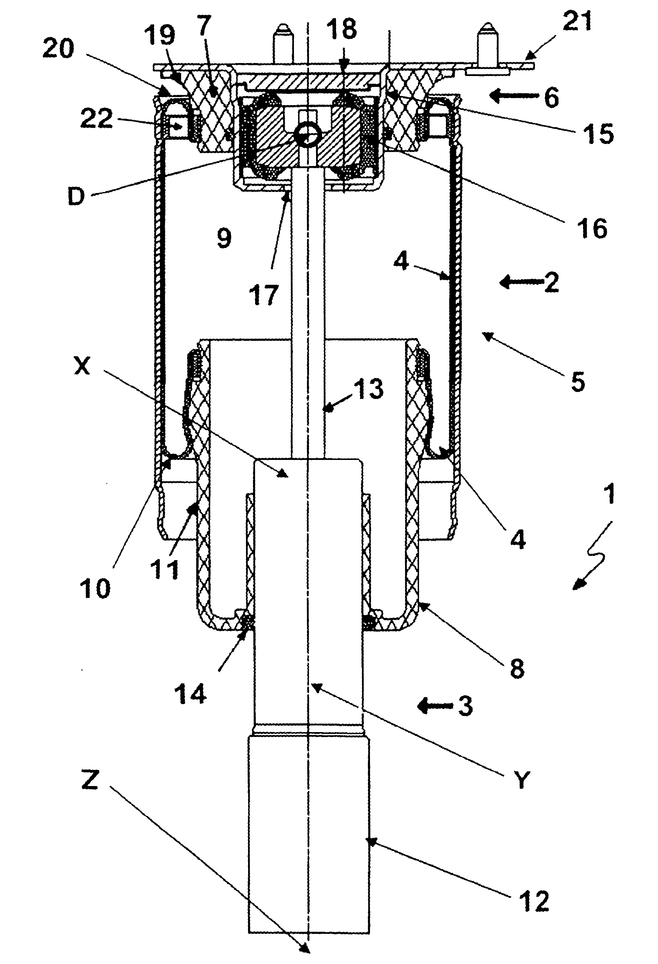

## Patentansprüche

1. Luftfederanordnung (1), bestehend aus:
a) einem Luftfederkopf (6) mit einer Aufnahme für ein Dämpferlager (16), das einen Elastomerkörper und ein Tragstück umfasst,
b) einem Stoßdämpfer (3), aus einem Behälterrohr (12), das zumindest abschnittsweise von einem Abrollkolben (8) umgeben ist, sowie eine Kolbenstange (13) hat, die fest mit dem Tragstück des Dämpferlagers (16) verbunden ist und gleitend in das Behälterrohr (12) eintaucht;
c) einem Luftfederbalg (4) aus elastomerem Werkstoff, der insbesondere mit einem eingebetteten Festigkeitsträger versehen ist, wobei die beiden Balgenden am Luftfederkopf (6) einerseits und am Abrollkolben (8) andererseits befestigt sind, wodurch der Luftfederbalg eine volumenelastische Luftkammer (9) einschließt, wobei ferner der Luftfederbalg eine erste Schlaufe (10) ausbildet, die an der Außenwand (11) des Abrollkolbens entlang gleiten kann und der Luftfederkopf (6) eine Außenkontur (19) aufweist, die mit einer zweiten Schlaufe (20) des Luftfederbalges (4) in Kontakt steht,
**dadurch gekennzeichnet,**
**dass** die Aufnahme als Aufnahmekammer (15) ausgebildet ist, in der Form eines Topfes aus Stahl oder Aluminium, die von einem getrennt hergestellten und aus Kunststoff bestehenden Gehäuse (7) eingefasst ist, dessen Außenkontur (19) die gekrümmte Abroll- und Anschlagsfläche für die zweite Schlaufe (20) des Luftfederbalges (4) bildet, und die einstückig und im Wesentlichen rechtwinklig in ein karosseriefestes das Gehäuse (7) abdeckendes Anbindungsteil (21) übergeht.

2. Luftfederanordnung nach Anspruch 1, **dadurch gekennzeichnet, dass** die Drehpunkte (D) des Dämpferlagers (16) und der zweiten Schlaufe (20) aufeinander liegen oder nur geringfügig von einander abweichen.

3. Luftfederanordnung nach einem der Ansprüche 1 oder 2, **dadurch gekennzeichnet, dass** der Abrollkolben (8) aus Kunststoff besteht.

4. Luftfederanordnung nach einem der Ansprüche 1 bis 3, **dadurch gekennzeichnet, dass** der Kunststoff faserverstärkt, insbesondere glasfaserverstärkt ist.

5. Luftfederanordnung nach einem der Ansprüche 1 bis 4, **gekennzeichnet durch** eine Außenführung (5) für den Luftfederbalg (4) die die erste Schlaufe (10) und die zweite Schlaufe (20) des Luftfederbalgs (4) mit umfasst.

6. Luftfederanordnung nach Anspruch 5, **dadurch gekennzeichnet, dass** im näheren Bereich der zweiten Schlaufe (20) ein Stützring (22) vorhanden ist, der den Luftfederbalg (4) an die Außenführung (5) presst.

## Claims

1. Air spring arrangement (1), composed of:
a) an air spring head (6) having a receptacle for a damper mount (16) which comprises an elastomer body and a load-bearing piece,
b) a shock absorber (3), composed of a tank tube (12) which is surrounded at least in sections by a rolling piston (8) and has a piston rod (13) which is fixedly connected to the load-bearing piece of the damper mount (16) and dips slidingly into the tank tube (12);
c) an air spring bellows (4) which is composed of elastomeric material and which is provided in particular with an embedded strength support, with the two bellows ends being fastened to the air spring head (6) at one side and to the rolling piston (8) at the other side, as a result of which the air spring bellows encloses an air chamber (9) which is elastic in volume, with the air spring bellows additionally forming a first loop (10) which can slide along on the outer wall (11) of the rolling piston and the air spring head (6) having an outer contour (19) which is in contact with a second loop (20) of the air spring bellows (4),
**characterized**
**in that** the receptacle is embodied as a receiving chamber (15), in the form of a steel or aluminium pot, which receiving chamber (15) is enclosed by a separately produced housing (7) which is composed of plastic and whose outer contour (19) forms the curved rolling and stop face for the second loop (20) of the air spring bellows (4), and which receiving chamber (15) merges in one piece with and substantially at right angles into a connecting part (21) which is fixed to the body and covers the housing (7).

2. Air spring arrangement according to Claim 1, **characterized in that** the centres of rotation (D) of the damper mount (16) and of the second loop (20) coincide or deviate from one another only slightly.

3. Air spring arrangement according to one of Claims 1 or 2, **characterized in that** the rolling piston (8) is composed of plastic.

4. Air spring arrangement according to one of Claims 1 to 3, **characterized in that** the plastic is fibre-reinforced, in particular glass-fibre-reinforced.

5. Air spring arrangement according to one of Claims 1 to 4, **characterized by** an outer guide (5) for the air spring bellows (4), which outer guide (5) surrounds the first loop (10) and the second loop (20) of the air spring bellows (4).

6. Air spring arrangement according to Claim 5, **characterized in that** a support ring (22) is provided in the closer region of the second loop (20), which support ring (22) presses the air spring bellows (4) against the outer guide (5).

## Revendications

1. Ensemble de suspension pneumatique (1), constitué :
a) d'une tête de ressort pneumatique (6) avec un logement pour un palier d'amortisseur (16), qui comprend un corps en élastomère et une pièce portante,
b) un amortisseur (3), constitué d'un tube contenant (12) qui est entouré au moins en partie par un piston déroulant (8), et qui présente une tige de piston (13), qui est connectée fixement à la pièce portante du palier d'amortisseur (16) et qui plonge en glissant dans le tube contenant (12) ;
c) un soufflet de ressort pneumatique (4) en matériau élastomère, qui est pourvu notamment d'un renfort encastré, les deux extrémités du soufflet étant fixées d'une part à la tête du ressort pneumatique (6) et d'autre part au piston déroulant (8), de sorte que le soufflet du ressort pneumatique inclut une chambre à air de volume élastique (9), le soufflet du ressort pneumatique constituant en outre une première boucle (10) qui peut glisser le long de la paroi extérieure (11) du piston déroulant et la tête du ressort pneumatique (6) présentant un contour extérieur (19) qui est en contact avec une deuxième boucle (20) du soufflet de ressort pneumatique (4),
**caractérisé en ce que**
le logement est réalisé sous forme de chambre de réception (15) en forme de pot en acier ou en aluminium, qui est enveloppée par un boîtier (7) fabriqué séparément et constitué de plastique, dont le contour extérieur (19) forme la surface courbe de déroulement et de butée pour la deuxième boucle (20) du soufflet du ressort pneumatique (4), et qui se prolonge d'une seule pièce et sensiblement à angle droit dans une pièce de liaison (21) fixée à la carrosserie et recouvrant le boîtier (7).

2. Ensemble de suspension pneumatique selon la revendication 1, **caractérisé en ce que** les pivots (D) du palier d'amortisseur (16) et de la deuxième boucle (20) sont placés l'un contre l'autre ou s'écartent seulement légèrement l'un de l'autre.

3. Ensemble de suspension pneumatique selon l'une quelconque des revendications 1 ou 2, **caractérisé en ce que** le piston déroulant (8) est en plastique.

4. Ensemble de suspension pneumatique selon l'une quelconque des revendications 1 à 3, **caractérisé en ce que** le plastique est renforcé par des fibres, notamment des fibres de verre.

5. Ensemble de suspension pneumatique selon l'une quelconque des revendications 1 à 4, **caractérisé par** un guidage extérieur (5) pour le soufflet du ressort pneumatique (4), qui comprend la première boucle (10) et la deuxième boucle (20) du soufflet du ressort pneumatique (4).

6. Ensemble de suspension pneumatique selon la revendication 5, **caractérisé en ce que** dans la région plus proche de la deuxième boucle (20) est disposée une bague de support (22) qui presse le soufflet du ressort pneumatique (4) contre le guidage extérieur (5).
